# EUROPEAN PATENT SPECIFICATION

(11) **EP 3 237 552 B1**
(45) Date of publication and mention of the grant of the patent: **26.01.2022**
(21) Application number: 15817310.4
(22) Date of filing: 21.12.2015
(51) Int. Cl.: C09D 5/44, C09D 133/08, C09D 5/33, C09D 5/02, C08K 5/3475, C09D 133/10, C08K 5/17

(54) **METHOD FOR PROTECTING WOOD**
VERFAHREN ZUM SCHUTZ VON HOLZ
PROCÉDÉ POUR PROTÉGER LE BOIS

(30) Priority: 24.12.2014 EP 14200303
(43) Date of publication of application: 01.11.2017
(73) Proprietor: Akzo Nobel Coatings International B.V., 1077 WW Amsterdam (NL)
(72) Inventor: STUIVER, Anthonie, NL-2431 XN Noorden (NL); PASIKOWSKA, Karolina Renata, NL-2353 LB Leiderdorp (NL); SOLLEVELD, Matthijs, NL-2681 MR Monster (NL); LITTLE, Anna Frances, Reading Berkshire RG1 7BJ (GB)
(74) Representative: Akzo Nobel IP Department
(86) International application number: PCT/EP2015/080767
(87) International publication number: WO 2016/102448

(56) References cited:
- WO-A1-99/14278
- WO-A2-96/22338
- WO-A2-2014/060456
- US-A- 5 939 514
- US-A1- 2007 043 151

## Description

### Field of the Invention

The present invention pertains to a method for protecting wet or damp wood, in particular to a method for protecting such wood by providing it with a coating composition to form a coating layer, and to the use of such coating composition in the protection of wet or damp wood.

### Background of the Invention

Exterior wood, that is, wood which is used outside, comes into contact with outside influences such as rain and sunlight. Wood is often coated, also indicated as painted, to protect it from outside conditions and to improve its appearance and durability. The coating or painting of exterior wood may be affected by prevailing climatological conditions. Coating of wet or damp wood, i.e. wood with a relatively high moisture content, typically results in poor adhesion of the coating to the wood substrate. As a consequence of such poor adhesion, the coating may be washed off the substrate in case of a rain shower soon after the coating has been applied, or the appearance of the coating may be adversely affected by such early rain shower. To avoid such poor results, the painter takes care to apply the wood coating onto wood with a low moisture content. The painter further tries to ensure that the application of the coating takes place when rain is not expected. However, in temperate climates this requirement severely limits the time during which exterior wood can be painted. This in turn makes it difficult to plan a coating operation for exterior wood.

Therefore, there is a need in the art for a coating composition which gives good results on wood with a high moisture content, so that a painting operation can be carried out with less consideration for the weather conditions, both regarding past weather, which impacts the moisture content of the wood that is coated, and regarding future weather, i.e., the possibility of rain occurring shortly after a coating operation.

In this context it is important that for wet wood a coating layer is obtained with good properties such as hardness, water repellency, and good weathering properties. Additionally, for coating of wood with a high moisture content, it is important that the presence of the coating on the wood does not interfere with the properties of the wood. For example, it would be undesirable if the presence of the coating on the wood would capture the moisture in the wood in a manner which would detrimentally affect the properties of the wood, e.g., its durability.

US2007043151 discloses an aqueous composition comprising (a) at least one anionically stabilized latex polymer, (b) at least one polyfunctional amine, and (c) at least one volatile base; wherein said polymer (a) has Tg of 21° C. or higher. US2007043151 further provides a method for coating leather and for coating elastomer comprising the step of applying to said leather or said elastomer at least one layer of the coating. Wood as a substrate is also mentioned.

### Summary of the Invention

The present invention provides a method for protecting wood with a relatively high moisture content in which these problems are addressed. The method according to the invention uses a coating composition which gives good results on wood with a relatively high moisture content. Further, the coating composition shows good early rain resistance on wet wood. Additionally, the coating of wet wood with the specified coating composition does not detrimentally affect the properties of the coated wood.

The invention therefore pertains to a method for protecting wood, comprising coating wood with a coating composition, wherein the coating composition is an aqueous coating composition comprising at least one anionically stabilized latex polymer, at least one polyfunctional amine, and at least one volatile base, and having a pH in the range of 9.5 to 11, wherein the wood has a moisture content of at least 15 wt.% as specified in claim 1.

The invention further pertains to the use of the coating composition as defined hereinabove in the protection of wood, wherein the wood has a moisture content of at least 15 wt.%.

### Detailed Description of the Invention

The coating composition described herein gives good results in the coating of wood with a higher moisture content, in the present specification also indicated as wet wood. It has been found that a drying time can be obtained which is substantially reduced as compared to commercially available wood coating compositions. Further, it has been found that an early rain resistance can be obtained which is substantially higher than what can be obtained using commercially available wood coating compositions.

Therefore, the invention pertains to a method for protecting wood, wherein the wood has a moisture content of at least 15 wt.%. As a general maximum for the moisture content, a value of 35 wt.% may be mentioned. More commonly, the moisture content may be at most 30 wt.%. In one embodiment, the wood has a moisture content of at least 20 wt.%, or even at least 25 wt.%. Moisture content can be determined by methods known in the art, using a commercially available moisture meter.

In another embodiment, the present invention pertains to a method for protecting wood, wherein the wood has a moisture content of at least 15 wt.%, but wherein part of the wood has a moisture content of at least 15 wt.% and part of the wood has a moisture content which is below 15 wt.%, wherein the method comprises the step of coating the wood with a coating composition as described herein. The preferred ranges indicated above for the moisture content of the wet wood also apply here.

It is noted that WO96/22338 describes coating compositions comprising at least one anionically stabilized latex polymer, at least one polyfunctional amine, and at least one volatile base, with the pH of the coating composition before application onto the substrate being in the range of 8-11. WO96/22338 describes the coating composition for use as traffic paint on roadways. As will be evident to the skilled person, there is no relation between the suitability of a coating for the coating of wood and for the coating of road surfaces. There is no indication that a composition suitable for use in road markings can also be suitable for use on wood, in particular that good results may be obtained on wet wood. There are numerous differences between road surfaces and wood surfaces which impact the performance of coating compositions on these surfaces. A particular issue here is that wood is susceptible to rot, while road surfaces are not. This means that a wood coating will have to be able to form a shield to protect the wood from outside influences. This is not required for road coatings. Further, for coatings on wet wood it is important that the water is not "trapped" in the wood by the coating layer to prevent rot. This is also not important for the coating of road surfaces.

Additionally, the mechanism underlying the coating of the present invention would seem to make it unsuitable for use on wood. In the aqueous coating composition, the latex particles are anionic, i.e., negatively charged. The aqueous coating composition has a pH in the range of from 9.5 to 11. Reference to the pH of the aqueous coating composition is to the pH of the coating composition before it is applied onto the wood. At a pH in the range of from 9.5 to 11, the polyfunctional amine is neutral (not charged) and the latex and the amine do not coagulate. After application of the coating, the volatile base will start to evaporate. With evaporation of the base, the pH of the coating composition will decrease. The amine groups in the polyfunctional amine will become positively charged, thus attracting the latex particles, and the polyfunctional amine will flocculate with the latex particles. This flocculation process would seem to lead to a coating with an open structure. However, coatings with an open structure are considered not suitable for use on wood, as they will not protect the surface because there is no effective barrier between the outside atmosphere and the wood. In this context it should be noted that a coating on road surfaces is intended to provide markings thereon, and not to protect the surface from outside influences. In contrast, wood coatings are intended to protect the wood from outside influences.

The wood used in the present invention may be any kind of wood that is used in the exterior. Examples include hardwood, such as meranti, and softwood such as spruce pine, etc. The invention finds particular application in the coating of softwoods such as spuce and pine, as softwood is more susceptible to degradation than hardwood. For softwood it is also particularly surprising that it is possible to coat wood with a high moisture content without subsequent degradation of the wood.

The coating composition can be applied by methods known in the art, e.g., via a bush, roller, spray application, dipping, or by any other suitable means. A brush, which is commonly used for coating exterior wood, is also suitable for this application. After application of the coating, the coating is allowed to dry.

The composition according to the invention may be used directly onto the wood as a primer, to be followed by a top coat. It may also be used as top coat on a primer layer. In a wood coating system comprising a primer coating composition and a top coat coating composition, it is possible for both coating compositions to be according to the invention. It is also possible for the primer coating composition to be according to the invention while the top coat coating composition is not according to the invention, or for the top coat coating composition to be according to the invention while the primer coating composition is not. This latter embodiment is of particular importance in maintenance work, where a new top coat is applied on wood provided with an existing primer.

Thus, in one embodiment of the present invention, the coating composition is applied as primer directly on wood, i.e. directly on uncoated wood. In another embodiment of the present invention the coating composition is applied on wood which is provided with a previously applied coating layer.

The total layer thickness of the coating layer on the wood is not critical to the present invention. The total coating thickness after drying is generally in the range of from 10 to 120 µm, in particular in the range of from 20 to 80 µm. This coating layer can be obtained in a single coating step, or in multiple coating steps, e.g., two, three, or four coating steps, and as indicated above, can be built up from coatings with different compositions.

It is a particular feature of the present invention that the coating composition can be applied onto the wood at relatively low temperatures while still obtaining good results, such as an acceptable drying time and a good early rain resistance. Therefore, in one embodiment of the present invention, the wood is provided with a layer of the coating composition at a temperature of less than 18 °C, in particular less than 15 °C, more in particular less than 12 °C. As a minimum value, a temperature of 2 °C may be mentioned. Applying the coating at a temperature below that value may detrimentally affect the coating.

A further feature of the present invention is that the coating composition can be applied on the wood at high relative humidity, while still obtaining good results, such as an acceptable drying time and a good early rain resistance. Relative humidity is defined as the ratio between the amount of water vapor present in a given volume of air at a certain temperature and the maximum amount of water vapor that can be incorporated in that volume of air at the specified temperature. A high relative humidity may be defined as a relative humidity of above 70%. As an upper limit, a relative humidity of 95% may be mentioned, because above a relative humidity of 95% rain may start to form. Of course, the coating can also be applied at relative humidity of 70% and less, e.g., in the normal range of 30-70%.

The coating composition used in the method according to the invention will be described in more detail below.

The coating composition comprises at least one anionically stabilized latex polymer. As is well known to the person skilled in the art, an anionically stabilized latex polymer is a composition comprising solid polymer particles dispersed in a solvent, in this case a water-based solvent, wherein the solid polymer particles are anionically charged, so that they repulse each other, thus forming a stable dispersion. In general, the polymers described in WO96/22338 are suitable also for use in this invention. Within the context of the present specification the term polymer encompasses both homopolymers and copolymers.

It is preferred for the coating composition to comprise, calculated on the dry weight of the coating composition, at least 50 wt.% of anionically stabilized latex polymer, in particular at least 80 wt. % and preferably 90 wt.%. As an upper limit, a value of 99.5 wt.% may me mentioned.

The amount of anionically stabilized latex polymer in the coating composition as it is applied to the wood may vary within wide ranges. It will generally be at least 10 wt.%, because at values below that amount the amount of liquid coating composition required to provide a suitable amount of polymer on the wood substrate will be unacceptably high. On the other hand, it will generally be at most 50 wt.%, because at values above that amount the coating composition as it is applied to the wood may become too viscous. It may be preferred for the amount of anionically stabilized latex polymer in the coating composition as it is applied to the wood to be in the range of from 15 to 45 wt.%, in particular in the range of from 20 to 40 wt.%.

The polymer used herein generally has a Tg of from -10 °C to +50 °C.

It is preferred for the polymer to be a (meth)acrylate based polymer. In the context of the present specification a (meth)acrylate based polymer is a polymer which comprises at least 80 wt.% of the total of (meth)acrylate and (meth)acrylic acid monomers in polymerised form. It may be preferred for the polymer to comprise at least 90 wt.% of the total of (meth)acrylate and (meth)acrylic acid monomers in polymerised form, more in particular at least 95 wt.%. It may be preferred for the polymer to consist essentially of (meth)acrylate and (meth)acrylic acid monomers. The term "consists essentially of" means that very minor amounts of other polymers may be present, e.g., derived from a non-(meth)acrylate seed monomers applied in polymer manufacture.

The term "(meth)acrylate monomers" is meant to include those monomers which are used to prepare the (meth)acrylate copolymers which are suitable for use in the compositions of this invention. Included therein are conventionally known acrylates, such as, for example, alkyl esters of acrylic acid, represented by the formula CH₂ = CHCOOR, and alkyl esters of methacrylic acid, represented by the formula CH₂ = CCH₃COOR, where R is a hydrocarbyl or a substituted hydrocarbyl group containing from 1 to 16 carbon atoms. The term "(meth)acrylic acid monomers" is meant to include acrylic acid, methacrylic acid and substituted derivatives thereof.

The term "(meth)acrylate monomers" as used herein is meant also to include the monovinyl acrylate and methacrylate monomers. The (meth)acrylates can include esters, amides and substituted derivatives thereof. Generally, the preferred (meth)acrylates are C1-C8 alkyl acrylates and methacrylates.

Examples of suitable (meth)acrylates include methyl acrylate, ethyl acrylate, butyl acrylate, hexyl acrylate, 2-ethylhexyl acrylate, octyl acrylate and isooctyl acrylate, n-decyl acrylate, isodecyl acrylate, tert-butyl acrylate, methyl methacrylate, butyl methacrylate, hexyl methacrylate, isobutyl methacrylate, isopropyl methacrylate as well as 2-hydroxyethyl acrylate and acrylamide. The preferred (meth)acrylates are methyl acrylate, ethyl acrylate, butyl acrylate, 2-ethylhexyl acrylate, octyl acrylate, isooctyl acrylate, methyl methacrylate and butyl methacrylate. Other suitable monomers include lower alkyl acrylates and methacrylates including acrylic and methacrylic ester monomers: methyl acrylate, ethyl acrylate, n-butyl acrylate, t-butyl acrylate, 2-ethylhexyl acrylate, decyl acrylate, isobornyl acrylate, methyl methacrylate, ethyl methacrylate, n-propyl methacrylate, isopropyl methacrylate, n-butyl methacrylate, isobutyl methacrylate, sec-butyl methacrylate, cyclohexyl methacrylate, isodecyl methacrylate, isobornyl methacrylate, t-butylaminoethyl methacrylate, stearyl methacrylate, glycidyl methacrylate, dicyclopentenyl methacrylate, phenyl methacrylate.

Anionically stabilized latex polymers and their preparation methods are known in the art, and require no further elucidation here. They are commercially available from, e.g., Dow Chemicals.

The composition may comprise an anionically stabilized alkyd emulsion. In one embodiment, the composition comprises a (meth)acrylate based polymer as described above in combination with up to 50 wt.%, calculated on the total amount of binder, of an anionically stabilized alkyd emulsion. It may be preferred within this embodiment for the composition to comprise a (meth)acrylate based polymer as described above in combination with 5-40 wt.%, calculated on the total amount of binder, of an anionically stabilized alkyd emulsion. Anionically stabilized alkyd emulsions are known in the art and require no further elucidation here.

The coating composition comprises at least one polyfunctional amine. Within the context of the present specification a polyfunctional amine is a molecule having at least two amine groups.

Preferably, the polyfunctional amine has a weight averaged molecular weight in the range of from 250 to 20,000 g/mol. If the molecular weight is below 250, the flocculation effect triggered by the polyfuctional amine will not be obtained to a sufficient extent. If the molecular weight of the polyfunctional amine is too high, the viscosity of the composition will be too high, and the composition will be difficult to use. It has been found preferred for the weight averaged molecular weight of the amine to be in the range of from 400 to 5,000 g/mol, preferably in the range of from 400 to 3,000 g/mol, in particular in the range of from 700 to 2,000 g/mol. Any reference herein to the molecular weight is to the weight averaged molecular weight. The weight averaged molecular weight of polyfunctional amines is determined by light scattering, by methods well-known in the art.

It is preferred for the polyfunctional amine to be a polyimine, in particular a polyalkyleneimine, which can be obtained by polymerization of alkene monomers with imine monomers. Polyimines have nitrogen compounds in the polymer backbone. Suitable polylalkylene imines include polyethyleneimines and polypropylene imines. Suitable polyfunctional amines, in particular polyalkylene imines are known in the art. The use of polyethylene imine, in particular polyethylene imine with a molecular weight of from 700 to 2,000 g/mol is particularly preferred in the context of the present invention.

The polyfunctional amine is generally used in an amount in the range of from 0.1 to 5 wt.%, calculated on the total coating composition. If the amount of polyfunctional amine is too low, the flocculation effect will not occur to the required extent as there is insufficient positive charge. If the amount of amine is too high, the flocculation will also not occur, as there is an excess of positive charge. It is considered preferred for the polyfunctional amine to be present in an amount of at most 3 wt.%, calculated on the weight of the coating composition, more in particular at most 2 wt.%. An amount in the range of from 0.2 to 1.5 wt.% may be considered preferred.

The amount of polyfunctional amine can also be calculated on the binder. In that case it is preferred for the amount of polyfunctional amine to be in the range of from 0.2 to 5 wt.%, in particular of from 1 to 4 wt.% calculated on the latex polymer particles (dry weight).

The coating composition comprises at least one volatile base. A volatile base within the context of the present specification refers to a base which will evaporate from the coating composition after application thereof on the wood surface. The amount of volatile base is selected such that the desired pH is obtained. As a general rule, the amount of volatile base is in the range of from 0.1 to 5 wt.%, calculated on the solids content of the coating composition, also depending on the molecular weight of the base. It may be preferred for the amount of base to be in the range of from 0.1 to 3 wt.%, more in particular in the range of from 0.1 to 2 wt.%. The amount of base is determined by the amount that is required to bring the pH of the composition in the specified range.

It is preferred for the boiling point of the volatile base to be below 260 °C. The volatile base preferably is an amine-based base, as these compounds tend to have a relatively high volatility. It may be preferred for the base to be selected from ammonia (NH₃, also indicated as ammonium hydroxide), and organic amine compounds having up to 4 carbon atoms, such as methylamine, dimethylamine, ethylamine, and diethylamine. The use of ammonia is considered preferred in view of its high volatility.

The aqueous coating composition has a pH in the range of from 9.5 to 11. Reference herein to the pH of the aqueous coating composition, is to the pH of the coating composition before application. It has been found that if the pH of the coating composition at this point in time is too low, the coating will already start to flocculate before or during the application process. On the other hand, if the pH of the coating composition is too high at this point in time, it will take too much time for the volatile base to evaporate to such an extent that the pH comes into the range that the coating composition will flocculate. It is preferred for the pH to be in the range of from 10 to 11.

The coating composition is an aqueous coating composition, i.e., a coating composition wherein water is present as the main solvent. These types of coating compositions are also known in the art as water-borne coating compositions or water-based coating compositions. When applied, the coating compositions contain, for non-limiting example, about 50% to about 90% water, including other volatiles such as, without limitation, limited amounts of solvents, if desired. The amount of other volatiles will generally be at most 300 grams/liter, in particular at most 100 grams/liter.

The composition may contain other compounds known in the art, such as one or more conventional additives like thickeners, defoamers, matting agents, coalescent agents, biocides, ethylene glycols, surfactants and pigments. These compounds are known in the art and require no further specification here.

The coating composition may be such that an opaque coating layer is obtained. It may also be such that a transparent or translucent coating layer is obtained, which leaves the structure of the wood visible. It is within the scope of the skilled person to select a coating composition in such a way that an opaque or a transparent or translucent coating layer is obtained. It has been found that the coating composition according to the invention may result in transparent or translucent coating layers with an attractive appearance, so this is an attractive embodiment of the invention. In one embodiment, the composition used in the present invention is free of opacifying pigments.

The coating composition used in the present invention can be prepared by methods known in the art, which require no further elucidation here. In essence, the various components of the coating composition will be combined to form a liquid coating composition, wherein the combination of the various elements is carried out in such a manner that there is no premature flocculation of the coating composition.

The present invention pertains to a method for protecting wet wood, i.e. wood with a moisture content of at least 15 wt.%, wherein the wood is coated with a coating composition as described above. The invention also pertains to the use of the coating composition as described above in the protection of wet wood. Preferences described above for the method and the composition also apply to this use.

It will be clear to the skilled person that the various embodiments and preferences described herein can be combined, unless they are presented as mutually excluding alternatives.

### Examples

The invention will be elucidated by the following examples, without being limited thereto or thereby.

### Example 1: adhesion testing on wet and dry wood

Coating compositions were prepared as specified in Table 1.1. The binder was Primal AC 337, which is an anionically stabilized acrylic latex polymer. The polyfunctional amine was Lupasol FG, which is a polyethylene imine. Ammonia was used as volatile base. Water is used as solvent. The coating composition contained one or more of the conventional additives like thickener, defoamer, matting agent, coalescent agent, biocide, glycols and surfactants. The coatings which were compared have the same composition as regards these components.

**Table 1.1**

| | LB1 | LB2 | MB1 | MB2 |
|---|---|---|---|---|
| Binder solids (wt.%) | 24.6 | 24.6 | 30.5 | 30.5 |
| polyethylene imine (wt.%) | 0.4 | 0.8 | 0.4 | 0.8 |
| pH | 10.2 | 10.2 | 10.2 | 10.2 |

The weight percentages are calculated on the coating composition as it is coated onto the wood substrate. The pH is the pH of the composition just before it is applied onto the wood. The indications LB and MB in the sample names stand for, respectively, low build (low solids content) and medium build (medium solids content).

Test pieces of two different types of wood were used, namely meranti as hardwood, and spruce as softwood. Test pieces of three different moisture contents were obtained by placing the wood pieces in closed chamber with a suitable moisture content. The following three moisture contents were obtained: low (12-15 wt.% moisture), intermediate (about 22 wt.% moisture), and high (26-28 wt.% moisture).

The test pieces were provided with a layer of the coating composition using a brush and allowed to dry for 24 hours. Coating and drying was carried out at 10 °C to mimic harsh coating conditions. The dried layer thickness was about 20 µm.

The adhesion of the coating composition was determined by a cross-cut test involving scratching a cross onto the panel and determining the adhesion of the coating layer onto the wood. This is done by applying adhesive tape onto the cross, putting pressure on it, and removing the adhesive tape. The amount of coating layer which is removed with the adhesive tape is a measure for the (non)adhesion of the coating composition. The results are graded visually and classified with a value between 0 and 5, wherein 0 stands for good, i.e. no coating is lost from the surface, and 5 stands for a substantial loss of coating. The results are presented in Tables 1.2 and 1.3.

**Table 1.2: Adhesion on Meranti**

| | moisture content low | moisture content intermediate | moisture content high |
|---|---|---|---|
| LB1 | 0 | 0 | 0 |
| LB2 | 0 | 0 | 0 |
| MB1 | 0 | 0 | 0 |
| MB2 | 0 | 0 | 0 |

**Table 1.3: Adhesion on Spruce**

| | moisture content low | moisture content intermediate | moisture content high |
|---|---|---|---|
| LB1 | 0 | 0 | 0 |
| LB2 | 0 | 0 | 0 |
| MB1 | 0 | 0 | 0 |
| MB2 | 0 | 0 | 0 |

As can be seen from these results, the coating compositions show good adhesion on dry wood, but also on wood with moisture contents of 22 wt.% and higher, i.e. 26-28 wt.%.

### Example 2: Early rain resistance - effect of the amount of polyfunctional amine

The effect of the amount of polyfunctional amine was investigated in two coating compositions, which differ in the nature of the polyfunctional amine. Lupasol FG is a polyethylene imine with a weight averaged molecular weight of 800 g/mol; Lupasol G20 is a polyethylene imine with a weight averaged molecular weight of 1,300 g/mol (both obtained from BASF).

Water was used as solvent. The coating composition contained one or more of the conventional additives like thickener, defoamer, matting agent, coalescent agent, biocide, glycols and surfactants. The coatings which were compared have the same composition as regards these components.

**Table 2.1: Composition 2.1**

| Compound | Type | Amount |
|---|---|---|
| Primal AC 337 | anionically stabilized acrylic latex polymer | 30 wt.% |
| Lupasol FG | polyfunctional amine | 0-2.6 wt.% (calculated on the binder) |
| ammonia | volatile base | to the desired pH |
| pH | | 10.2 |

**Table 2.1: Composition 2.2**

| Compound | Type | Amount |
|---|---|---|
| Primal AC 337 | anionically stabilized acrylic latex polymer | 30 wt.% |
| Lupasol G20 | polyfunctional amine | 0-2.5 wt.% (calculated on the binder |
| ammonia | volatile base | to the desired pH |
| pH | | 10.2 |

Wood panels were coated with the various coating compositions to a dried layer thickness of 20 µm, using a brush. The wood panels were of spruce, and had a moisture content of about 30 wt.% . The coating process took place at 10 °C, and the panels were kept at that temperature.

The early rain resistance was determined by spraying coated panels with water at predetermined times after application of the coating. Spraying was carried out using a Cuprinol Fence Sprayer, which is a medium pressure spraying apparatus, capable of mimicking heavy rain. At the point in time that the coating layer is not sprayed off or damaged, early rain resistance is achieved. The early rain resistance is expressed in minutes.

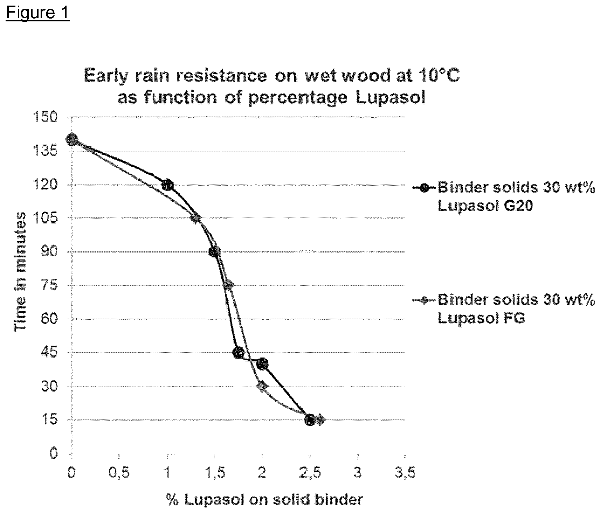

Figure 1 shows the early rain resistance at 10 °C as function of the percentage of polyfunctional amine for the compositions comprising varying amounts of polyfunctional amines of two types. It can be seen that for both types of amines their presence leads to an increase of early rain resistance. Figure 1 also shows that with the composition according to the invention it is possible to achieve an early rain resistance on wet wood at low temperatures of below 45 minutes, in particular below 30 minutes, more in particular of the order of 15 minutes. This is value which is attractive for commercial operation in moderate climates.

### Example 3: Early rain resistance - Comparison with commercially available wood coating compositions

The early rain resistance of a coating composition used in accordance with the present invention was compared with a number of commercially available coating compositions which are specifically sold for use on wood.

The coating composition used according to the invention comprised 30 wt.% of Primal AC337, 2 wt.%, calculated on the weight of the binder of Lupasol G20 as polyfunctional amine, and ammonia in an amount sufficient to bring the pH of the composition to a value of 10.2. Water was used as solvent. The coating composition contained one or more of the conventional additives like thickener, defoamer, matting agent, coalescent agent, biocide, glycols and surfactants. The coatings which were compared have the same composition as regards these components. The composition is referred to as Composition 3.1.

The coating compositions were applied on panels of dry wood (moisture content 12 wt.%) and wet wood (moisture content 30 wt.%) as described in Example 2 above. The dry panels were coated at 20 °C. The wet panels were coated at 10 °C. The early rain resistance was determined as described in Example 2 above. The results are presented in the following tables.

**Table 3.1: early rain resistance of dry wood coated with various coating compositions**

| Composition | early rain resistance (minutes) |
|---|---|
| Composition 3.1 | 10 |
| Cetol X pro (Sikkens) | 30 |
| Cetol BL31 (Sikkens) | 40 |
| Sadolin Pinotex (Ceta Bever) | 30 |
| Cetol SuperTech (Sikkens) | 30 |

**Table 3.2: early rain resistance of wet wood coated with various coating compositions**

| Composition | early rain resistance (minutes) |
|---|---|
| Composition 3.1 | 30 |
| Cetol X pro (Sikkens) | > 90 |
| Cetol BL31 (Sikkens) | > 90 |
| Sadolin Pinotex (Ceta Bever) | > 90 |
| Cetol SuperTech (Sikkens) | > 90 |

From the above tables it can be seen that composition 3.1 shows an improved early rain resistance as compared to commercially available wood coating compositions when coated on dry wood. When applied on wet wood, the composition used in accordance with the invention shows an early rain resistance within commercially acceptable limits. In contrast, the commercially available wood coating compositions are damaged or removed from the surface when spayed with water even 1.5 hours after application of the coating. This illustrates that these commercially available compositions are not suitable for coating of wet wood, while the composition used according to the invention is.

### Example 4: Weathering resistance of coatings on wet and dry wood

A coating composition was prepared with the following composition:

**Table 4.1: Composition 4.1**

| Compound | Type | Amount |
|---|---|---|
| Primal AC337 | anionically stabilized latex polymer | 30 wt.% |
| Lupasol G20 | polyfunctional amine | 1.5 wt.% (calculated on the amount of binder) |
| ammonia | volatile base | to the desired pH |
| pH | | 10.2 |

Water is used as solvent. The coating composition contained one or more of the conventional additives like thickener, defoamer, matting agent, coalescent agent, biocide, glycols and surfactants. The coatings which were compared have the same composition as regards these components.

The compositions were applied on wood panels using a brush to a layer thickness of 20 microns. The wood panels were of spuce. Dry panels (moisture content of 12 wt.%) were coated at 20 °C. Wet panels (moisture content of 30 wt.%) were coated at 10 °C. The coated panels were placed outside in a temperate climate (Slough, United Kingdom).

From visual evaluation after a 12 months period, it appeared that the panels coated in this example showed good results in the weathering test. This can be seen from a good gloss retention, no discoloration, and the absence of flaking and fungal growth. This applies both to the coating layers applied on the dry wood, and to the coating layers applied on the wet wood. This shows that the coating composition specified herein shows good results both on dry wood and wet wood, which illustrates its suitability for use in a temperate climate.

## Claims

1. Method for protecting wood, comprising coating wood with a coating composition, wherein the coating composition is an aqueous coating composition comprising at least one anionically stabilized latex polymer, at least one polyfunctional amine, and at least one volatile base, and having a pH in the range of from 9.5 to 11, wherein the wood has a moisture content of at least 15 wt.%;
wherein the amount of anionically stabilized latex polymer in the coating is at least 10 wt% and at most 50 wt%; wherein the polyfunctional amine has a weight averaged molecular weight in the range of from 250 to 20,000 g/mol, the weight averaged molecular weight determined by light scattering; wherein the amount of polyfunctional amine in the coating composition is in the range of from 0.1 to 5 wt% calculated on the total coating composition.

2. Method according to claim 1, wherein the wood has a moisture content of at least 20 wt.%, preferably at least 25 wt.% and/or at most 35 wt.%, in particular at most 30 wt.%.

3. Method according to claim 1 or 2, wherein part of the wood has a moisture content of at least 15 wt.% and part of the wood has a moisture content which is below 15 wt.%.

4. Method according to any one of the preceding claims, wherein the coating composition is applied directly on wood.

5. Method according to any one of claims 1-3, wherein the coating composition is applied on wood which is provided with a previously applied coating layer.

6. Method according to any one of the preceding claims, wherein the wood is provided with a layer of the coating composition at a temperature of less than 18 °C, in particular less than 15 °C, more in particular less than 12 °C, and generally at least 2 °C.

7. Method according to any one of the preceding claims, wherein the coating is applied at a relative humidity in the range of from 70 to 95 wt.%.

8. Method according to any one of the preceding claims, wherein the polyfunctional amine has a weight averaged molecular weight in the range of from 400 to 5,000 g/mol, preferably in the range of from 400 to 3,000 g/mol, more in particular in the range of from 700 to 2,000 g/mol, the weight averaged molecular weight determined by light scattering.

9. Method according to any one of the preceding claims, wherein the polyfunctional amine is a polyalkylene imine, in particular a polyethylene imine, more in particular a polyethylene imine with a weight averaged molecular weight of from 700 to 2,000 g/mol, the weight averaged molecular weight determined by light scattering.

10. Method according to any one of the preceding claims, wherein the volatile base is an amine-based base, preferably selected from ammonia and organic amine compounds having up to 4 carbon atoms, in particular ammonia.

11. Method according to any one of the preceding claims, wherein the coating composition comprises, calculated on the dry weight of the coating composition, at least 80 wt.% of anionically stabilized latex polymer, in particular at least 90 wt.%.

12. Method according to any one of the preceding claims wherein the anionically stabilized latex polymer is a polymer which comprises at least 80 wt.% of the total of (meth)acrylate and (meth)acrylic acid monomers in polymerized form, in particular at least 90 wt.%, more in particular at least 95 wt.%.

13. Use of an aqueous coating composition as defined in any one of claims 1, and 8-12 in the protection of wood, wherein the wood has a moisture content of at least 15 wt.%.

14. Use according to claim 13, wherein the wood has a moisture content of at least 20 wt.%, preferably at least 25 wt.% and/or at most 35 wt.%, in particular at most 30 wt.%.

## Patentansprüche

1. Verfahren zum Schützen von Holz, umfassend Beschichten von Holz mit einer Beschichtungszusammensetzung, wobei die Beschichtungszusammensetzung eine wässrige Beschichtungszusammensetzung ist, die wenigstens ein anionisch stabilisiertes Latexpolymer, wenigstens ein polyfunktionelles Amin und wenigstens eine flüchtige Base umfasst und einen pH-Wert in dem Bereich von 9,5 bis 11 aufweist, wobei das Holz einen Feuchtegehalt von wenigstens 15 Gew.-% aufweist;
wobei die Menge an anionisch stabilisiertem Latexpolymer in der Beschichtung wenigstens 10 Gew.-% und höchstens 50 Gew.-% beträgt; wobei das polyfunktionelle Amin ein gewichtsgemitteltes Molekulargewicht in dem Bereich von 250 bis 20.000 g/mol aufweist, wobei das gewichtsgemittelte Molekulargewicht durch Lichtstreuung bestimmt wird; wobei die Menge an polyfunktionellem Amin in der Beschichtungszusammensetzung in dem Bereich von 0,1 bis 5 Gew.-%, berechnet bezogen auf die gesamte Beschichtungszusammensetzung, liegt.

2. Verfahren gemäß Anspruch 1, wobei das Holz einen Feuchtegehalt von wenigstens 20 Gew.-%, vorzugsweise wenigstens 25 Gew.-%, und/oder höchsten 35 Gew.-%, insbesondere höchstens 30 Gew.-%, aufweist.

3. Verfahren gemäß Anspruch 1 oder 2, wobei ein Teil des Holzes einen Feuchtegehalt von wenigstens 15 Gew.-% aufweist und ein Teil des Holzes einen Feuchtegehalt aufweist, der unter 15 Gew.-% beträgt.

4. Verfahren gemäß einem der vorstehenden Ansprüche, wobei die Beschichtungszusammensetzung direkt auf Holz aufgebracht wird.

5. Verfahren gemäß einem der Ansprüche 1-3, wobei die Beschichtungszusammensetzung auf Holz aufgebracht wird, das mit einer zuvor aufgebrachten Beschichtungsschicht versehen ist.

6. Verfahren gemäß einem der vorstehenden Ansprüche, wobei das Holz mit einer Schicht der Beschichtungszusammensetzung bei einer Temperatur von weniger als 18 °C, insbesondere weniger als 15 °C, insbesondere weniger als 12 °C und im Allgemeinen wenigstens 2 °C versehen wird.

7. Verfahren gemäß einem der vorstehenden Ansprüche, wobei die Beschichtung bei einer relativen Feuchtigkeit in dem Bereich von 70 bis 95 Gew.-% aufgebracht wird.

8. Verfahren gemäß einem der vorstehenden Ansprüche, wobei das polyfunktionelle Amin ein gewichtsgemitteltes Molekulargewicht in dem Bereich von 400 bis 5.000 g/mol, vorzugsweise in dem Bereich von 400 bis 3.000 g/mol, insbesondere in dem Bereich von 700 bis 2.000 g/mol, aufweist, wobei das gewichtsgemittelte Molekulargewicht durch Lichtstreuung bestimmt wird.

9. Verfahren gemäß einem der vorstehenden Ansprüche, wobei das polyfunktionelle Amin ein Polyalkylenimin ist, insbesondere ein Polyethylenimin, insbesondere ein Polyethylenimin mit einem gewichtsgemittelten Molekulargewicht von 700 bis 2.000 g/mol, wobei das gewichtsgemittelte Molekulargewicht durch Lichtstreuung bestimmt wird.

10. Verfahren gemäß einem der vorstehenden Ansprüche, wobei die flüchtige Base eine Base auf Aminbasis ist, vorzugsweise ausgewählt aus Ammoniak und organischen Aminverbindungen mit bis zu 4 Kohlenstoffatomen, insbesondere Ammoniak.

11. Verfahren gemäß einem der vorstehenden Ansprüche, wobei die Beschichtungszusammensetzung, berechnet bezogen auf das Trockengewicht der Beschichtungszusammensetzung, wenigstens 80 Gew.-%, insbesondere wenigstens 90 Gew.-%, an anionisch stabilisiertem Latexpolymer umfasst.

12. Verfahren gemäß einem der vorstehenden Ansprüche, wobei das anionisch stabilisierte Latexpolymer ein Polymer ist, das wenigstens 80 Gew.-%, insbesondere wenigstens 90 Gew.-%, insbesondere wenigstens 95 Gew.-%, an der Summe von (Meth)acrylat- und (Meth)acrylsäuremonomeren in polymerisierter Form umfasst.

13. Verwendung einer wässrigen Beschichtungszusammensetzung gemäß einem der Ansprüche 1 und 8-12 bei dem Schützen von Holz, wobei das Holz einen Feuchtegehalt von wenigstens 15 Gew.-% aufweist.

14. Verwendung gemäß Anspruch 13, wobei das Holz einen Feuchtegehalt von wenigstens 20 Gew.-%, vorzugsweise wenigstens 25 Gew.-% und/oder höchstens 35 Gew.-%, insbesondere höchstens 30 Gew.-%, aufweist.

## Revendications

1. Procédé pour la protection du bois, comprenant le revêtement du bois avec une composition de revêtement, la composition de revêtement étant une composition aqueuse de revêtement comprenant au moins un polymère de type latex stabilisé de manière anionique, au moins une amine polyfonctionnelle, et au moins une base volatile, et possédant un pH dans la plage allant de 9,5 à 11, le bois possédant une teneur en humidité d'au moins 15 % en poids ;
la quantité de polymère de type latex stabilisé de manière anionique dans le revêtement étant d'au moins 10 % en poids et d'au plus 50 % en poids ; l'amine polyfonctionnelle possédant un poids moléculaire moyen en poids dans la plage allant de 250 à 20 000 g/mole, le poids moléculaire moyen en poids étant déterminé par diffusion de lumière ; la quantité d'amine polyfonctionnelle dans la composition de revêtement étant dans la plage allant de 0,1 à 5 % en poids calculée sur la composition de revêtement totale.

2. Procédé selon la revendication 1, le bois possédant une teneur en humidité d'au moins 20 % en poids, préférablement d'au moins 25 % en poids et/ou d'au plus 35 % en poids, en particulier d'au plus 30 % en poids.

3. Procédé selon la revendication 1 ou 2, une partie du bois possédant une teneur en humidité d'au moins 15 % en poids et une partie du bois possédant une teneur en humidité qui est inférieure à 15 % en poids.

4. Procédé selon l'une quelconque des revendications précédentes, la composition de revêtement étant appliquée directement sur le bois.

5. Procédé selon l'une quelconque des revendications 1 à 3, la composition de revêtement étant appliquée sur le bois qui est fourni avec une couche de revêtement appliquée précédemment.

6. Procédé selon l'une quelconque des revendications précédentes, le bois étant pourvu d'une couche de la composition de revêtement à une température inférieure à 18 °C, en particulier inférieure à 15 °C, plus particulièrement inférieure à 12 °C, et généralement d'au moins 2 °C.

7. Procédé selon l'une quelconque des revendications précédentes, le revêtement étant appliqué à une humidité relative dans la plage allant de 70 à 95 % en poids.

8. Procédé selon l'une quelconque des revendications précédentes, l'amine polyfonctionnelle possédant un poids moléculaire moyen en poids dans la plage allant de 400 à 5 000 g/mole, préférablement dans la plage allant de 400 à 3 000 g/mole, plus particulièrement dans la plage allant de 700 à 2 000 g/mole, le poids moléculaire moyen en poids étant déterminé par diffusion de lumière.

9. Procédé selon l'une quelconque des revendications précédentes, l'amine polyfonctionnelle étant une polyalkylèneimine, en particulier une polyéthylèneimine, plus particulièrement une polyéthylèneimine dotée d'un poids moléculaire moyen en poids allant de 700 à 2 000 g/mole, le poids moléculaire moyen en poids étant déterminé par diffusion de lumière.

10. Procédé selon l'une quelconque des revendications précédentes, la base volatile étant une base à base d'amine, préférablement choisie parmi l'ammoniac et des composés de type amine organique possédant jusqu'à 4 atomes de carbone, en particulier l'ammoniac.

11. Procédé selon l'une quelconque des revendications précédentes, la composition de revêtement comprenant, calculé sur le poids sec de la composition de revêtement, au moins 80 % en poids de polymère de type latex stabilisé de manière anionique, en particulier au moins 90 % en poids.

12. Procédé selon l'une quelconque des revendications précédentes, le polymère de type latex stabilisé de manière anionique étant un polymère qui comprend au moins 80 % en poids du total de monomères de type (méth)acrylate et acide (méth)acrylique sous forme polymérisée, en particulier au moins 90 % en poids, plus particulièrement au moins 95 % en poids.

13. Utilisation d'une composition aqueuse de revêtement telle que définie dans l'une quelconque des revendications 1 et 8 à 12 dans la protection de bois, le bois possédant une teneur en humidité d'au moins 15 % en poids.

14. Utilisation selon la revendication 13, le bois possédant une teneur en humidité d'au moins 20 % en poids, préférablement d'au moins 25 % en poids et/ou d'au plus 35 % en poids, en particulier d'au plus 30 % en poids.
